# EUROPEAN PATENT APPLICATION

(11) **EP 4 789 752 A1**
(43) Date of publication of application: **12.08.2026**
(21) Application number: 25156314.4
(22) Date of filing: 06.02.2025
(51) Int. Cl.: B01D 53/56, C01B 21/26, C01B 21/28, C01B 21/38

(54) **PROCESS FOR PRODUCTION OF NITRIC ACID AND A NITRIC ACID PRODUCTION PLANT**

(71) Applicant: Yara International ASA, 0277 Oslo (NO)
(72) Inventor: ØIEN, Halvor, 0277 Oslo (NO)
(74) Representative: De Clercq & Partners

(57) **Abstract**

The present disclosure relates to a process for production of nitric acid and a nitric acid production plant, particularly wherein a tail gas recycle stream is supplied to the converter. More in particular, in the process and plant of the present disclosure, at least part of the tail gas is treated in a tail gas treatment section and further heated in a heating section, thereby obtaining a heated tail gas stream, typically having the temperature in the range of 400-600°C. The temperature of this heated tail gas stream is reduced by mixing with a tail gas bypass stream bypassing the tail gas treatment section and/or heating section, resulting in the tail gas recycle stream that can be recirculated to the converter and having the correct temperature for the converter, typically having a temperature in the range of 150-300°C. The disclosure further provides the use of the nitric acid production plant for performing the method according to present disclosure and the method of revamping a nitric acid production plant.

## Description

### Field of the disclosure

The present disclosure relates to the field of production of nitric acid by ammonia oxidation. More particularly, the disclosure relates to the improved production of nitric acid by ammonia oxidation with reduced nitrogen oxide emissions and reduced formation of undesired intermediates.

### Background of the disclosure

Nitric acid is industrially produced by ammonia oxidation according to the Ostwald's process in a nitric acid plant comprising a burner section having an ammonia oxidation catalyst, a cooling/condensation section, an absorption section with an outlet for a nitric acid stream and an outlet for tail gas.

In the burner section, ammonia is oxidized on catalyst gauzes, producing nitric oxide and water. Generally, ammonia/air mixture is used for the catalytic combustion. The nitric oxide, following cooling, is further oxidized to nitrogen dioxide (NO₂) and further to dinitrogen tetroxide (N₂O₄). The nitrogen dioxide and dinitrogen tetroxide gases are commonly known as the NOₓ gases. The reactions occurring in this process are depicted below:

4 NH₃ (g) + 5 O₂ (g) ----> 4 NO (g) + 6 H₂O (I)

2 NO (g) + O₂ (g) ----> 2 NO₂ (g)

2 NO₂ (g) ----> N₂O₄ (g)

In the condensation section, the condensation of NOₓ gases is accomplished first through the use of a waste heat recovery system recovering the heat from the conversion of ammonia into nitrogen oxides and then through the use of a cooler condenser following compression through a NOₓ gas compressor. Consequently, the nitrogen dioxide and dinitrogen tetroxide are converted to diluted nitric acid. The last step occurs in the absorption section where the uncondensed NOₓ gases are passed through the absorption section and water is fed in as an absorption medium. By absorption in water, raw nitric acid is obtained along with a tail gas stream.

3 NO₂ (g) + H₂O (I) ----> 2 HNO₃ (aq) + NO (g)

3 N₂O₄ (g) + 2 H₂O (I) ----> 4 HNO₃ (aq) + 2 NO (g)

The efficiency of absorption of NOₓ gases in water is never 100%. Therefore, NOₓ gases (particularly NO and NO₂) are always present in the tail gas stream leaving the absorption section. Further, the tail gas stream emerging from the absorption section also contains N₂O which is a powerful greenhouse gas. As such, venting the tail gas stream is environmentally not desirable and typically a tail gas treatment section for removing both the NOₓ gases and N₂O is necessary. The stringent standards of nitrogen oxides emission from industrial plants encourage nitric acid producers to search for new efficient solutions to meet the emission limits. The tail gas treatment also increases capital expenditure (equipment costs) and operation expenses of the plant and process. Various techniques are put in place to reduce tail gas NOₓ and N₂O levels that generally involve improved absorption, chemical scrubbing, adsorption, and catalytic tail gas reduction.

Capa 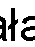 a, P et al (2023); The Technology of Tail Gases Purifying in Nitric Acid Plants and Design of deN₂O and deNOx Reactors-Review; Sci. 2023, 13(13), 7492 discloses that the NOₓ and N₂O influence can be reduced by using a reactor with a DeNOₓ/DeN₂O dual-bed catalytic system, in which the gas stream is first purified of NOₓ followed by N₂O purification.

EP3717403B1 discloses a nitric acid production process, comprising tertiary abatement of N₂O and NOₓ on a tail gas withdrawn from an absorption stage, said abatement includes passing the tail gas over a sequence of a deN₂O stage comprising an iron-zeolite (Fe-z) catalyst and a DeNOₓ stage comprising a V₂O₅-TiO₂ catalyst in the presence of gaseous ammonia, wherein the tail gas at the inlet of DeN₂O stage and the tail gas at the inlet of DeNOₓ stage have a temperature greater than 400°C.

US3927182A describes a nitric acid production process employing an oxygen make-up gas having a molecular oxygen content of about 90 to 99 volume percent as a source of oxygen supply for the process, and recycling at least about 40 volume% of the tail gas. In the process, a substantial decrease in the amount of nitrogen oxides vented to the atmosphere is accomplished. FIG. 2 of US3927182 shows that if oxygen supply gas is used with at least 90 mol% O₂, more than 90% of the tail gas is recycled. A part of the tail gas is purged directly to a stack and vented.

US11772971 discloses one such technique wherein the tail gas emerging from the absorption section is split such that the first part of the tail gas stream is heated and recycled to the burner section and the second part of the tail gas stream is supplied to a tail gas treatment section for cleaning NOₓ gases. Further, the temperature of the first part of tail gas stream is reduced by adding a tail gas coming directly from the absorption tower and thereafter supplied to said burner section. However, extracting the first part of tail gas before cleaning up NOₓ gases in the tail gas treatment section results in unreacted NOₓ which, when combining with ammonia, may form unwanted ammonium nitrate upstream of the converter. Furthermore, in a nitric acid plant, if the ammonia concentration is too high, together with nitrogen oxides, it can combine to form unwanted ammonium nitrate when the temperature is sufficiently low.

While ammonium nitrate is a useful chemical in the fertilizer industry, its presence in the nitric acid plant can lead to several disadvantages, both operational and safety related. Ammonium nitrate can cause aggressive corrosion in various parts of the plant, including piping, reactors, and equipment which may reduce their lifespan and increase maintenance costs. The ammonium nitrate accumulation can lead to risk of explosion and damage of equipment. The presence of ammonium nitrate can also result in contamination of the product stream. This could negatively impact the quality of the nitric acid produced, as ammonium nitrate may alter the composition and purity of the final product. Further, if ammonium nitrate is formed, additional processing steps may be required to separate or neutralize it, leading to higher operating costs for the plant. This adds to the overall complexity and cost of the operation.

Therefore, there remains a need for improved nitric acid production plants and processes that avoid formation of unwanted intermediates such as ammonium nitrate and have reduced nitrogen oxide emissions.

### Summary of the disclosure

The inventor has developed an improved nitric acid production plant and process, which addresses one or more of the above-mentioned drawbacks. The process of the present disclosure makes it possible to have an improved production of nitric acid by ammonia oxidation with reduced nitrogen oxide emissions and a reduced risk of ammonium nitrate formation.

One aspect of the present disclosure provides a process for production of nitric acid in a nitric acid production plant comprising a mixing apparatus, a converter, a condenser, an absorption tower with an outlet for evacuating a tail gas stream, a first heating section, a second heating section and a tail gas treatment section, the process comprising the steps:
(a) supplying an oxygen-enriched air mixture, an ammonia gas stream and a recycled tail gas stream to the mixing apparatus, thereby producing an ammonia/oxygen-enriched air mixture and further oxidising the ammonia/oxygen-enriched air mixture in the converter to obtain a NOₓ gas/steam mixture;
(b) separating and condensing steam from the NOₓ gas/steam mixture, thereby generating a stream comprising aqueous diluted nitric acid and uncondensed gaseous NOₓ;
(c) separating dilute nitric acid and uncondensed gaseous NOₓ from stream (13) comprising aqueous diluted nitric acid and uncondensed gaseous NOₓ, and supplying the uncondensed gaseous NOₓ to the absorption tower (4) for absorbing uncondensed gaseous NOₓ, thereby obtaining a raw nitric acid-containing stream and a tail gas;
(d) heating the tail gas in the first heating section to provide a heated tail gas stream;
(e) supplying the heated tail gas stream to the tail gas treatment section resulting in a treated tail gas stream; wherein a part of the treated tail gas stream is directed to the second heating section to obtain a second heated tail gas stream, wherein the temperature of a part of the second heated tail gas stream is reduced by adding a second part of the treated tail gas bypassing the second heating section thereby obtaining the recycled tail gas stream that is provided to the mixing apparatus and thereafter to the converter such that the temperature in the converter is maintained in the range of 800 and 950°C; and/or
supplying a part of the heated tail gas stream to the tail gas treatment section resulting in the treated tail gas stream, which is further supplied to the second heating section to obtain the second heated tail gas stream; wherein the temperature of a part of the second heated tail gas stream is reduced by adding a second part of the heated tail gas bypassing the tail gas treatment section thereby obtaining the recycled tail gas stream that is provided to the mixing apparatus and thereafter to the converter such that the temperature in the converter is maintained in the range of 800 and 950°C.

In one embodiment according to the process of the disclosure, the step c) further comprises passing the uncondensed gaseous NOₓ, particularly separated from the gas liquid separator, through a NOₓ compressor and thereafter through a cooler/condenser unit and is further provided to the absorption tower for absorbing uncondensed gaseous NOₓ.

In one embodiment according to the process of the disclosure, the temperature of the second heated tail gas stream is higher than the temperature of the recycled tail gas stream that is provided to the mixing apparatus and thereafter to the converter.

In one embodiment according to the process of the disclosure, the temperature of the second heated tail gas stream is in the range of 400-600°C and the temperature of the recycled tail gas stream is in the range of 150-300°C.

In one embodiment according to the process of the disclosure, the temperature of the heated tail gas stream is lower than the second heated tail gas stream or wherein the temperature of the treated tail gas stream is lower than the second heated tail gas stream.

In one embodiment according to the process of the disclosure, the temperature of the heated tail gas stream is in the range of 180-400°C and the temperature of the second heated tail gas stream is in the range of 400-600°C.

In one embodiment according to the process of the disclosure, the temperature of the treated tail gas stream is in the range of 200- 400°C and the temperature of the second heated tail gas stream is in the range of 400-600°C.

In one embodiment according to the process of the disclosure, the tail gas treatment section comprises catalytic beds for N₂O and/or NOₓ removal.

In one embodiment according to the process of the disclosure, the oxygen-enriched air mixture is obtained by mixing a pressurised oxygen-rich gas and a compressed air stream, wherein the source of pressurised oxygen-rich gas is a high pressure water electrolyser or a waste gas from an air separation unit and wherein the compressed air stream is obtained by compressing air in an air compressor.

In one embodiment according to the process of the disclosure, the ammonia gas stream is supplied from an ammonia plant or an ammonia storage tank.

Another aspect of the present disclosure provides a nitric acid production plant, for production of nitric acid comprising:
- a mixing apparatus for mixing an oxygen-enriched air mixture and an ammonia gas stream to provide an ammonia/oxygen-enriched air mixture;
- a converter for oxidising ammonia in the ammonia/oxygen-enriched air mixture to provide a NOₓ gas/steam mixture;
- a condensing means, particularly a gas cooler and a condenser, for separating and condensing steam from NOₓ gas/steam mixture thereby providing a mixture comprising aqueous diluted nitric acid and uncondensed gaseous NOₓ stream;
- a gas liquid separator for separating aqueous diluted nitric acid and uncondensed gaseous NOₓ;
- an absorption tower, located downstream of the gas liquid separator and configured to receive separated diluted nitric acid and to receive the uncondensed gaseous NOₓ from the gas liquid separator to provide a raw nitric acid-containing stream and a tail gas; wherein the absorption tower comprises an outlet for evacuating a tail gas stream;
- a first heating section for heating the tail gas to provide a heated tail gas stream;
- a tail gas treatment section for treating the heated tail gas stream resulting in treated tail gas stream;
- a means for splitting the treated tail gas stream, wherein a part of the treated tail gas stream is directed to a second heating section to obtain a second heated tail gas stream, and wherein a second part of the treated tail gas bypasses the second heating section and is added to the second heated tail gas stream, thereby reducing the temperature of a part of the second heated tail gas stream to obtain the recycle tail gas stream that is provided to the mixing apparatus and thereafter to the converter such that the temperature in the converter is maintained in the range of 800 and 950°C and/or
- a means for splitting the heated tail gas stream, wherein a part of the heated tail gas stream is supplied to the tail gas treatment section resulting in a treated tail gas stream and further supplied to a second heating section to obtain a second heated tail gas stream; wherein the temperature of a part of the second heated tail gas stream is reduced by adding a second part of the heated tail gas bypassing the tail gas treatment section thereby obtaining the recycle tail gas stream that is provided to the mixing apparatus and thereafter to the converter such that the temperature in the converter is maintained in the range of 800 and 950°C.

In one embodiment according to the plant of the disclosure, the plant further comprises a NOₓ compressor for receiving the uncondensed gaseous NOₓ, particularly separated from the gas liquid separator, and a cooler/condenser unit located downstream of the NOₓ compressor for cooling and condensing the uncondensed gaseous NOₓ and further provided to the absorption tower for absorbing uncondensed gaseous NOₓ.

In one embodiment according to the plant of the disclosure, the tail gas treatment section comprises catalytic beds for N₂O and/or NOₓ removal.

In one embodiment according to the plant of the disclosure, the plant further comprises an air compressor to provide a compressed air stream and a source of pressurised oxygen-rich gas, particularly a high-pressure water electrolyser or a waste gas from an air separation unit, in fluid communication with the compressed air stream to provide the oxygen-enriched air mixture.

In one embodiment according to the plant of the disclosure, the ammonia gas stream is supplied from an ammonia plant or an ammonia storage tank.

Another aspect of the present disclosure provides an use of the nitric acid production plant of the present disclosure for performing the method of the present disclosure.

Another aspect of the present disclosure provides a method of revamping a nitric acid production plant, wherein the existing nitric acid production plant comprises:
- a mixing apparatus for mixing an oxygen-enriched air mixture and ammonia gas stream to provide an ammonia/oxygen-enriched air mixture;
- a converter for oxidising ammonia in the ammonia/oxygen-enriched air mixture to provide a NOₓ gas/steam mixture;
- a condensing means, particularly a gas cooler and a condenser, for separating and condensing steam from NOₓ gas/steam mixture thereby providing a mixture comprising aqueous diluted nitric acid and uncondensed gaseous NOₓ;
- a gas liquid separator for separating aqueous diluted nitric acid and uncondensed gaseous NOₓ;
- an absorption tower located downstream of the gas liquid separator and configured to receive separated diluted nitric acid and to receive the uncondensed gaseous NOₓ from the gas liquid separator to provide a raw nitric acid-containing stream and a tail gas; wherein the absorption tower comprises an outlet for evacuating a tail gas stream;
- a first heating section for heating the tail gas to provide a heated tail gas stream;
- a tail gas treatment section for treating the heated tail gas stream resulting in treated tail gas stream; and
- optionally comprising a NOₓ compressor for receiving the uncondensed gaseous NOₓ separated from the gas liquid separator and a cooler/condenser unit downstream of the NOₓ compressor for cooling and condensing the uncondensed gaseous NOₓ and further provided to the absorption tower for absorbing the uncondensed gaseous NOₓ;
the method of revamping comprising the step of:
- introducing a means for splitting the treated tail gas stream, wherein a part of the treated tail gas stream is directed to a second heating section to obtain a second heated tail gas stream, wherein the temperature of a part of the second heated tail gas stream is reduced by adding a second part of the treated tail gas bypassing the second heating section thereby obtaining a recycled tail gas stream that is provided to the mixing apparatus and thereafter to the converter such that the temperature in the converter is maintained in the range of 800 and 950°C and/or
- introducing a means for splitting the heated tail gas stream, wherein a part of the heated tail gas stream is supplied to a tail gas treatment section resulting in a treated tail gas stream and further supplied to a second heating section to obtain a second heated tail gas stream; wherein the temperature of a part of the second heated tail gas stream is reduced by adding a second part of the heated tail gas bypassing the tail gas treatment section to obtain a recycled tail gas stream that is provided to the mixing apparatus and thereafter to the converter such that the temperature in the converter is maintained in the range of 800 and 950°C.

### Description of the figures

The following description of the figures of a specific embodiment according to the present disclosure is only given by way of example and is not intended to limit the present explanation, its application or use. In the figures, identical reference numerals refer to the same or similar parts and features.
FIG. 1 shows one embodiment of the mono-pressure nitric acid plant according to the present disclosure.
FIG. 2 shows another embodiment of the mono-pressure nitric acid plant according to the present disclosure.
FIG. 3 shows one embodiment of the dual-pressure nitric acid plant according to the present disclosure.
FIG. 4 shows another embodiment of the dual-pressure nitric acid plant according to the present disclosure.

### Detailed description

For convenience, the terms used herein have their meaning recognized and known to those of skilled in the art, however, for convenience and completeness, particular terms and their meanings are set forth below.

The articles "a," "an" and "the" are used to refer to one or to more than one (i.e., to at least one) of the grammatical object of the article. As used herein, the singular forms "a", "an", and "the" include both singular and plural referents unless the context clearly dictates otherwise.

The terms "comprise" and "comprising" are used in the inclusive, open sense, meaning that additional elements may be included. The terms "comprising", "comprises" and "comprised of' as used herein are synonymous with "including", "includes" or "containing", "contains", and are inclusive or open-ended and do not exclude additional, non-recited members, elements, or method steps. It is not intended to be construed as "consists of only."

The recitation of numerical ranges by endpoints includes all numbers and fractions subsumed within the respective ranges, as well as the recited endpoints.

Unless defined otherwise, all technical and scientific terms used herein have the same meaning as commonly understood by one of ordinary skill in the art to which this disclosure belongs. Although any methods and materials similar or equivalent to those described herein can be used in the practice or testing of the disclosure, the preferred methods, and materials are now described.

All references cited in the present specification are hereby incorporated by reference in their entirety. In particular, the teachings of all references herein specifically referred to are incorporated by reference.

Throughout the description, the term "tail gas" from nitric acid plant is construed to mean an exhaust gas from the nitric acid plant containing nitrogen, water, and impurities such as NOₓ gases and N₂O. The term "NOₓ" as used herein is a collective term used for oxides of nitrogen, particularly NO and NO₂. N₂O is commonly known as laughing gas and is a hazardous greenhouse gas.

The present disclosure relates to an improved process for production of nitric acid and an improved nitric acid production plant, particularly wherein an improved tail gas recycle stream is supplied to the converter. More in particular, in the process and plants of the present disclosure, at least part of the tail gas is treated in a tail gas treatment section and further heated in a heating section, thereby obtaining a heated tail gas stream, typically having the temperature in the range of 400-600°C. The temperature of this heated tail gas stream is reduced by mixing with a tail gas bypass stream bypassing the tail gas treatment section and/or heating section, resulting in the tail gas recycle stream that can be recirculated to the converter and having the correct temperature for the converter, typically having a temperature in the range of 150-300°C.

The nitric acid process as disclosed herein, can be a mono pressure (single-pressure) process or a dual pressure (split-pressure) process. In a mono pressure process, the converter and the absorber unit operate at roughly the same working pressure. Such a mono-pressure process generally includes either the low-pressure (LP) process from 2 to 6 bar or a high pressure (HP) process from 6 to 16 bar, in particular from 9 to 16 bar. In a dual pressure process, the absorber unit operates at a higher working pressure than the ammonia converter. The modern dual pressure process features a low-pressure (LP) ammonia converter operating typically at 2 to 6 bar, and a high pressure (HP) absorber unit operating at 9 to 16 bar. Thus, the advantages of the low-pressure combustion are combined with the advantages of the high-pressure absorption.

Accordingly in one aspect of the present disclosure, a process for production of nitric acid in a nitric acid production plant is disclosed, wherein the nitric acid plant comprises a mixing apparatus, a converter, a condenser, an absorption tower with an outlet for evacuating a tail gas stream, a first heating section, a second heating section and a tail gas treatment section. The process comprises the steps:
a) supplying an oxygen-enriched air mixture, an ammonia gas stream and a recycled tail gas stream to the mixing apparatus, thereby producing an ammonia/oxygen-enriched air mixture and further oxidising the ammonia/oxygen-enriched air mixture in the converter to obtain a NOₓ gas/steam mixture;
b) separating and condensing steam from the NOₓ gas/steam mixture, thereby generating a stream comprising aqueous diluted nitric acid and uncondensed gaseous NOₓ;
c) separating dilute nitric acid and uncondensed gaseous NOₓ from stream comprising aqueous diluted nitric acid and uncondensed gaseous NOₓ, and supplying the uncondensed gaseous NOₓ to the absorption tower for absorbing uncondensed gaseous NOₓ, thereby obtaining a raw nitric acid-containing stream and a tail gas;
d) heating the tail gas in a first heating section to provide a heated tail gas stream;
e) supplying the heated tail gas stream to the tail gas treatment section resulting in a treated tail gas stream; wherein a part of the treated tail gas stream is directed to the second heating section to obtain a second heated tail gas stream, wherein the temperature of a part of the second heated tail gas stream is reduced by adding a second part of the treated tail gas bypassing the second heating section thereby obtaining the recycled tail gas stream that is provided to the mixing apparatus and thereafter to the converter such that the temperature in the converter is maintained in the range of 800 and 950°C; and/or
supplying a part of the heated tail gas stream to the tail gas treatment section resulting in the treated tail gas stream, which is further supplied to the second heating section to obtain the second heated tail gas stream; wherein the temperature of a part of the second heated tail gas stream is reduced by adding a second part of the heated tail gas bypassing the tail gas treatment section thereby obtaining the recycled tail gas stream that is provided to the mixing apparatus and thereafter to the converter such that the temperature in the converter is maintained in the range of 800 and 950°C.

In particular embodiments, the nitric acid plant comprises a mixing apparatus, a converter, a gas cooler, a condenser, an absorption tower with an outlet for evacuating a tail gas stream, a first heating section, a second heating section and a tail gas treatment section. The process comprising the steps of:
(a) supplying an oxygen-enriched air mixture, an ammonia gas stream and a recycled tail gas stream to the mixing apparatus, thereby producing an ammonia/oxygen-enriched air mixture and further oxidising the ammonia/oxygen-enriched air mixture in the converter to obtain a NOₓ gas/steam mixture;
(b) providing the NOₓ gas/steam mixture to the gas cooler and to the condenser for separating and condensing steam, thereby generating a stream comprising aqueous diluted nitric acid and uncondensed gaseous NOₓ;
(c) supplying the stream comprising aqueous diluted nitric acid and uncondensed gaseous NOₓ to a gas liquid separator thereby separating diluted nitric acid and uncondensed gaseous NOₓ, the diluted nitric acid is supplied to a weak acid pump and further to the absorption tower located downstream of the weak acid pump and the uncondensed gaseous NOₓ is further supplied to the absorption tower for absorbing uncondensed gaseous NOₓ, thereby obtaining a raw nitric acid-containing stream and a tail gas;
(d) heating the tail gas in the first heating section to provide a heated tail gas stream;
(e) supplying the heated tail gas stream to the tail gas treatment section resulting in a treated tail gas stream; wherein a part of the treated tail gas stream is directed to the second heating section to obtain a second heated tail gas stream, wherein the temperature of a part of the second heated tail gas stream is reduced by adding a second part of the treated tail gas bypassing the second heating section thereby obtaining the recycled tail gas stream that is provided to the mixing apparatus and thereafter to the converter such that the temperature in the converter is maintained in the range of 800 and 950°C; and/or
supplying a part of the heated tail gas stream to the tail gas treatment section resulting in the treated tail gas stream, which is further supplied to the second heating section to obtain the second heated tail gas stream; wherein the temperature of a part of the second heated tail gas stream is reduced by adding a second part of the heated tail gas bypassing the tail gas treatment section thereby obtaining the recycled tail gas stream that is provided to the mixing apparatus and thereafter to the converter such that the temperature in the converter is maintained in the range of 800 and 950°C.

In one embodiment according to the process of the disclosure, the step c) further comprises passing the uncondensed gaseous NOₓ separated from the gas liquid separator through a NOₓ compressor and thereafter through a cooler/condenser unit and is further provided to the absorption tower for absorbing uncondensed gaseous NOₓ.

As known to the skilled person, the term "converter" is alternatively referred to as "burner section" or "ammonia converter." The converter comprises a reactor equipped with a burner hood, a gas distributor, one or more catalyst gauzes, and can optionally have a basket. Typically, the reactor will comprise a combustion chamber in which a suitable catalyst is placed. The catalysts for the oxidation of ammonia are known to the skilled person and will generally comprise a noble metal or their alloys. A typical way of providing the catalyst is by means of one or more wire gauzes, such as a stack of wire gauzes, placed inside the reactor, such as in the combustion chamber.

The term "condenser" is alternatively referred to as "cooling/condensation section" and comprises a cooling section and a condensation section, optionally combined in a single unit. In the cooling section, the burner gas stream is subjected to cooling, typically by heat exchange with a cooling fluid and/or with a process stream to be heated, so as to form a cooled burner gas stream, and for instance raising steam or heating tail gas on the cooling fluid side. The cooling section comprises one or more heat exchanging sections. In the condensation section said cooled burner gas stream is subjected to condensation, so as to form an aqueous diluted nitric acid solution and uncondensed nitrogen oxides i.e. gaseous NOₓ stream.

The term "absorption tower" can be alternatively referred to as 'absorption section' or "absorber" or "absorption column" wherein the gaseous NOₓ stream is subjected to absorption in water so as to form a raw nitric acid-containing stream and a tail gas. The absorption tower is in fluid communication with the cooling/condensation section. Stated differently, the absorption tower comprises an inlet connected to a liquid outlet of the cooling/condensation section, and an inlet connected to a gas outlet of the cooling/condensation section, an inlet for water, a liquid outlet for a raw nitric acid stream and a gas outlet for tail gas. The raw nitric acid stream is for instance supplied to a bleaching section for further purification.

The tail gas treatment section typically comprises catalyst beds and can be a combination of DeNOₓ reactor and a DeN₂O reactor (or a combined N2O and NOx reduction reactor). In the DeNOₓ reactor, the NOₓ gases are effectively eliminated utilising a reductant, for example, ammonia. This technique is also known as selective catalytic reduction (SCR) technique. In this process NOₓ gases undergo catalytic reaction with the reductant resulting in nitrogen gas and water vapour. In the DeNzO reactor, the N₂O gas typically reacts with the catalyst to produce nitrogen gas and oxygen gas. In certain DeNzO reactors, the N₂O gas can also react with a reductant, for example ammonia to produce nitrogen gas and oxygen gas. The DeNOₓ and DeNzO reactions occurring in these reactors are shown below:

6 NO + 4NH₃ ----> 5 N₂ + 6 H₂O

6 NOz + 8 NH₃ ----> 7 N₂ + 12 H₂O

2 N₂O ----> 2 N₂ + O₂

3 N₂O + 2 NH₃ ---> 4 N₂ + 3 H₂O

The inventor has surprisingly found that by extracting a part of the tail gas downstream of the tail gas treatment section, less NOₓ gases return to the ammonia converter when the treated tail gas is recycled. This treated tail gas has a temperature in the range of 200-250 °C. When a part of the treated tail gas is further heated in a heating section, a heated tail gas stream is obtained, typically having the temperature in the range of 400-600 °C. The temperature of this heated tail gas stream can be reduced by mixing the first part of the treated tail gas (with less NOₓ content) resulting in a stream that can be recirculated to the converter. This makes it possible to attain the correct temperature of the stream that enters the converter. Typically, the stream that enters the converter has a temperature in the range of 150-300°C. Consequently, this allows to maintain the temperature of the converter in the range of 800 and 950°C. Further, as most of the NOₓ is removed from the treated tail gas, the possibility of unreacted NOₓ combining with ammonia forming unwanted ammonium nitrate is greatly reduced.

The first heating section and second heating section as disclosed herein, typically comprise of one or more heat exchangers located downstream of the ammonia converter. The heat exchangers provide heat transfer from a process fluid to a tail gas or another coolant fluid. Depending on the process demands, a single heat exchanger may be employed or two or more heat exchangers may be connected in parallel or in series. This configuration offers several advantages. The heat exchangers are characterised by specific process conditions selected to prevent corrosion.

Further, the inventor has surprisingly found that extracting a part of the tail gas upstream of the tail gas treatment section before cleaning up the NOₓ gases, the process does not consume ammonia in the DeNOₓ reactions. Thus, there is less demand of ammonia for converting NOₓ to nitrogen gas. The NOₓ gases (NO and NO₂) in the tail gas stream will pass unreacted through the ammonia oxidation gauze in the converter and then end up in the process gas. Therefore, there is a slightly less loss of NOₓ in the process. Moreover, due to less demand for ammonia, the possibility of unreacted NOₓ combining with ammonia forming unwanted ammonium nitrate in low temperature points upstream of the gauzes is also reduced. Further, the tail gas stream bypassing the tail gas treatment section has a temperature in the range of 180-400°C. The remaining part of the tail gas can be passed through the tail gas treatment section to obtain a treated tail gas and further heated in a heating section to provide a heated tail gas stream, typically having the temperature in the range of 400-600 °C. The temperature of this heated tail gas stream can be reduced by mixing the part of the tail gas stream bypassing the tail gas treatment section. This makes it possible to attain the correct temperature of the stream that enters the converter. Typically, the stream that enters the converter has a temperature in the range of 150-300 °C. Consequently, this allows to maintain the temperature of the converter in the range of 800 and 950°C. Furthermore, by supplying only a part of the heated tail gas to the tail gas treatment section, the process advantageously allows for a smaller catalyst volume for the tail gas treatment section. Reduced air intake may also contribute to lower catalyst deterioration by fewer impurities in the process gas to the converter. By recirculating parts of the tail gas, advantageously, the NOₓ emissions from the tail gas may be reduced.

In one embodiment according to the process of the disclosure, the temperature of the second heated tail gas stream is higher than the temperature of the recycled tail gas stream.

In one embodiment according to the process of the disclosure, the temperature of the second heated tail gas stream is in the range of 400-600°C and the temperature of the recycled tail gas stream is in the range of 150-300°C.

In one embodiment according to the process of the disclosure, the temperature of the heated tail gas stream is lower than the second heated tail gas stream or wherein the temperature of the treated tail gas stream is lower than the second heated tail gas stream.

In one embodiment according to the process of the disclosure, the temperature of the heated tail gas stream is in the range of 180-400°C and the temperature of the second heated tail gas stream is in the range of 400-600°C.

In one embodiment according to the process of the disclosure, the temperature of the treated tail gas stream is in the range of 200- 400°C and the temperature of the second heated tail gas stream is in the range of 400-600°C.

As known to the skilled person, the temperature of the tail gas stream emerging from the absorption tower is in the range of 5-60°C. The heating of this tail gas stream in the tail gas heating section comprises heat exchange against the burner gas stream, to provide a heated tail gas stream.

In one embodiment according to the process of the disclosure, the tail gas treatment section comprises catalytic beds for N₂O and/or NOₓ removal.

In one embodiment according to the process of the disclosure, the oxygen-enriched air mixture is obtained by mixing a pressurised oxygen-rich gas and a compressed air stream, wherein the source of pressurised oxygen-rich gas is a high pressure water electrolyser or a waste gas from an air separation unit and wherein the compressed air stream is obtained by compressing air in an air compressor.

As defined herein, a pressurised oxygen-rich gas is a gas having a pressure ranging from 9 to 30 bar, preferably 15 to 30 bar. The oxygen-rich gas is a gas comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen.

As defined herein, air is ambient air, having a pressure about the atmospheric pressure. System for producing nitric acid.

In one embodiment according to the process of the disclosure, the ammonia gas stream is supplied from an ammonia plant or an ammonia storage tank.

Another aspect of the present disclosure provides a nitric acid production plant, for production of nitric acid comprising:
- a mixing apparatus for mixing an oxygen-enriched air mixture, an ammonia gas stream and a recycled tail gas stream, to provide an ammonia/oxygen-enriched air mixture;
- a converter for oxidising ammonia in the ammonia/oxygen-enriched air mixture to provide a NOₓ gas/steam mixture;
- a condensing means for separating and condensing steam from the NOₓ gas/steam mixture thereby providing a mixture comprising aqueous diluted nitric acid and uncondensed gaseous NOₓ;
- a gas liquid separator for separating aqueous diluted nitric acid and uncondensed gaseous NOₓ;
- an absorption tower, located downstream the gas liquid separator and configured to receive the separated diluted nitric acid f and to receive the uncondensed gaseous NOₓ from the gas liquid separator, to provide a raw nitric acid-containing stream and a tail gas; wherein the absorption tower comprises an outlet for evacuating a tail gas stream;
- a first heating section for heating the tail gas to provide a heated tail gas stream;
- a tail gas treatment section for treating the heated tail gas stream resulting in treated tail gas stream; and
- a means for splitting the treated tail gas stream, wherein a part of the treated tail gas stream is directed to a second heating section to obtain a second heated tail gas stream, and wherein a second part of the treated tail gas bypasses the second heating section and is added to the second heated tail gas stream, thereby reducing the temperature of a part of the second heated tail gas stream to obtain the recycled tail gas stream that is provided to the mixing apparatus and thereafter to the converter such that the temperature in the converter is maintained in the range of 800 and 950°C, and/or
a means for splitting the heated tail gas stream, wherein a part of the heated tail gas stream is supplied to the tail gas treatment section resulting in a treated tail gas stream and further supplied to a second heating section to obtain a second heated tail gas stream; wherein the temperature of a part of the second heated tail gas stream is reduced by adding a second part of the heated tail gas stream bypassing the tail gas treatment section thereby obtaining the recycled tail gas stream that is provided to the mixing apparatus and thereafter to the converter such that the temperature in the converter is maintained in the range of 800 and 950°C.

In particular embodiments, the plant comprises:
- a mixing apparatus for mixing an oxygen-enriched air mixture and an ammonia gas stream to provide an ammonia/oxygen-enriched air mixture;
- a converter for oxidising ammonia in the ammonia/oxygen-enriched air mixture to provide a NOₓ gas/steam mixture;
- a gas cooler and a condenser for separating and condensing steam from NOₓ gas/steam mixture thereby providing a mixture comprising aqueous diluted nitric acid and uncondensed gaseous NOₓ;
- a gas liquid separator for separating aqueous diluted nitric acid and uncondensed gaseous NOₓ and connected to a weak acid pump configured to receive the separated diluted nitric acid;
- an absorption tower, located downstream of the weak acid pump and the gas liquid separator, and configured to receive separated dilute nitric acid from the weak acid pump and to receive the uncondensed gaseous NOₓ from the gas liquid separator to provide a raw nitric acid-containing stream and a tail gas; wherein the absorption tower comprises an outlet for evacuating a tail gas stream;
- a first heating section for heating the tail gas to provide a heated tail gas stream;
- a tail gas treatment section for treating the heated tail gas stream resulting in treated tail gas stream; and
- a means for splitting the treated tail gas stream, wherein a part of the treated tail gas stream is directed to a second heating section to obtain a second heated tail gas stream, and wherein a second part of the treated tail gas bypasses the second heating section and is added to the second heated tail gas stream, thereby reducing the temperature of the second heated tail gas stream to obtain a stream that enters the converter such that the temperature in the converter is maintained in the range of 800 and 950°C and/or a means for splitting the heated tail gas stream, wherein a part of the heated tail gas stream is supplied to the tail gas treatment section resulting in a treated tail gas stream and further supplied to a second heating section to obtain a second heated tail gas stream; wherein the temperature of a part of the second heated tail gas stream is reduced by adding a second part of the heated tail gas bypassing the tail gas treatment section thereby obtaining the recycle tail gas stream that is provided to the mixing apparatus and thereafter to the converter such that the temperature in the converter is maintained in the range of 800 and 950°C.

In one embodiment according to the plant of the disclosure, the plant further comprises a NOₓ compressor for receiving the uncondensed gaseous NOₓ separated from the gas liquid separator and a cooler/condenser unit located downstream of the NOₓ compressor for cooling and condensing the uncondensed gaseous NOₓ and further provided to the absorption tower for absorbing uncondensed gaseous NOₓ.

The terms "converter", "condenser", 'absorption tower' and 'tail gas treatment section' are as defined elsewhere herein.

In one embodiment according to the plant of the disclosure, the means for splitting the treated tail gas stream is positioned downstream from the tail gas tail gas treatment section.

As defined herein, means for splitting are any means suitable for splitting the treated tail gas stream. In particular, the means for splitting is a T-connection having one inlet and two outlets, such that a gas flowing through the inlet of the T- connection is splitted into two gas streams of identical chemical composition.

In one embodiment according to the plant of the disclosure, the means for splitting the heated tail gas stream is positioned downstream from the first heating section.

As defined herein, means for splitting are any means suitable for splitting the heated tail gas stream. In particular, the means for splitting is a T-connection having one inlet and two outlets, such that a gas flowing through the inlet of the T- connection is splitted into two gas streams of identical chemical composition.

The inventor has surprisingly found that by extracting a part of the tail gas downstream of the tail gas treatment section, less NOₓ gases return to the ammonia converter when the treated tail gas is recycled. This treated tail gas has a temperature in the range of 200-250 °C. When a part of the treated tail gas is further heated in a heating section a heated tail gas stream is obtained, typically having the temperature in the range of 400-600 °C. The temperature of this heated tail gas stream can be reduced by mixing the first part of the treated tail gas (with less NOₓ content) resulting in a stream that can be recirculated to the converter. This makes it possible to attain the correct temperature of the stream that enters the converter. Typically, the stream that enters the converter has a temperature in the range of 250-300 °C. Consequently, this allows to maintain the temperature of the converter in the range of 800 and 950 °C. Further, as most of the NOₓ is removed from the treated tail gas, the possibility of unreacted NOₓ combining with ammonia forming unwanted ammonium nitrate is greatly reduced.

Further, the inventor has surprisingly found that extracting a part of the tail gas upstream of the tail gas treatment section before cleaning up the NOₓ gases, the process does not consume ammonia in the DeNOₓ reactions. Thus, there is less demand of ammonia for converting NOₓ to nitrogen gas. The NOₓ gases (NO and NO₂) in the tail gas stream will pass unreacted through the ammonia oxidation gauze and then end up in the process gas. Therefore, there is a slightly less loss of NOₓ in the process. Moreover, due to less demand for ammonia, the possibility of unreacted NOₓ combining with ammonia forming unwanted ammonium nitrate is also reduced. Further, the tail gas stream bypassing the tail gas treatment section has a temperature in the range of 200-250 °C. The remaining part if the tail gas can be passed through the tail gas treatment section to obtain a treated tail gas and further heated in a heating section to provide a heated tail gas stream, typically having the temperature in the range of 400-600 °C. The temperature of this heated tail gas stream can be reduced by mixing the part of the tail gas stream bypassing the tail gas treatment section. This makes it possible to attain the correct temperature of the stream that enters the converter. Typically, the stream that enters the converter has a temperature in the range of 250-300 °C. Consequently, this allows to maintain the temperature of the converter in the range of 800 and 950 °C. Furthermore, by supplying only a part of the heated tail gas to the tail gas treatment section, the process advantageously allows for a smaller catalyst volume for the tail gas treatment section. Reduced air intake may also contribute to lower catalyst deterioration by fewer impurities in the tail gas stream supplied to the tail gas treatment section. Advantageously, the NOₓ emissions from the tail gas may be reduced.

In one embodiment according to the plant of the disclosure, the tail gas treatment section comprises catalytic beds for N₂O and/or NOₓ removal.

In one embodiment according to the plant of the disclosure, the plant further comprises an air compressor to provide a compressed air stream and a source of pressurised oxygen-rich gas, particularly a high-pressure water electrolyser or a waste gas from an air separation unit, in fluid communication with the compressed air stream to provide the oxygen-enriched air mixture.

As defined herein, a pressurised oxygen-rich gas is a gas having a pressure ranging from 9 to 30 bar, preferably 15 to 30 bar. The oxygen-rich gas is a gas comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen.

As defined herein, air is ambient air, having a pressure about the atmospheric pressure.

In one embodiment according to the plant of the disclosure, the ammonia gas stream is supplied from an ammonia plant or an ammonia storage tank.

Another aspect of the present disclosure provides an use of the nitric acid production plant of the present disclosure for performing the method of the present disclosure.

Another aspect of the present disclosure provides a method of revamping a nitric acid production plant, wherein the existing nitric acid production plant comprises:
- a mixing apparatus for mixing an oxygen-enriched air mixture and ammonia gas stream to provide an ammonia/oxygen-enriched air mixture;
- a converter for oxidising ammonia in the ammonia/oxygen-enriched air mixture to provide a NOₓ gas/steam mixture;
- a condensing means, particularly a gas cooler and a condenser, for separating and condensing steam from NOₓ gas/steam mixture thereby providing a mixture comprising aqueous diluted nitric acid and uncondensed gaseous NOₓ;
- a gas liquid separator for separating aqueous diluted nitric acid and uncondensed gaseous NOₓ and, particularly connected to a weak acid pump configured to receive the separated diluted nitric acid;
- an absorption tower located downstream of the weak acid pump and the gas liquid separator and configured to receive separated diluted nitric acid, particularly from weak acid pump, and to receive the uncondensed gaseous NOₓ from the gas liquid separator to provide a raw nitric acid-containing stream and a tail gas; wherein the absorption tower comprises an outlet for evacuating a tail gas stream;
- a first heating section for heating the tail gas to provide a heated tail gas stream;
- a tail gas treatment section for treating the heated tail gas stream resulting in treated tail gas stream; and
- optionally comprising a NOₓ compressor for receiving the uncondensed gaseous NOₓ separated from the gas liquid separator and a cooler/condenser unit downstream of the NOₓ compressor for cooling and condensing the uncondensed gaseous NOₓ and further provided to the absorption tower for absorbing the uncondensed gaseous NOₓ
the method of revamping comprising the step of:
- introducing a means for splitting the treated tail gas stream, wherein a part of the treated tail gas stream is directed to a second heating section to obtain a second heated tail gas stream, wherein the temperature of a part of the second heated tail gas stream is reduced by adding a second part of the treated tail gas bypassing the second heating section thereby obtaining a recycled tail gas stream that is provided to the mixing apparatus and thereafter to the converter such that the temperature in the converter is maintained in the range of 800 and 950°C and/or
- introducing a means for splitting the heated tail gas stream, wherein a part of the heated tail gas stream is supplied to a tail gas treatment section resulting in a treated tail gas stream and further supplied to a second heating section to obtain a second heated tail gas stream; wherein the temperature of a part of the second heated tail gas stream is reduced by adding a second part of the heated tail gas bypassing the tail gas treatment section to obtain a recycled tail gas stream that is provided to the mixing apparatus and thereafter to the converter such that the temperature in the converter is maintained in the range of 800 and 950°C.

Advantageously, this method of revamping an existing nitric acid production plant provides for minimum modifications of the existing plant while integrating the means for splitting the treated tail gas stream and the means for splitting the heated tail gas stream with low capital expenditure and with few changes on the nitric acid production process.

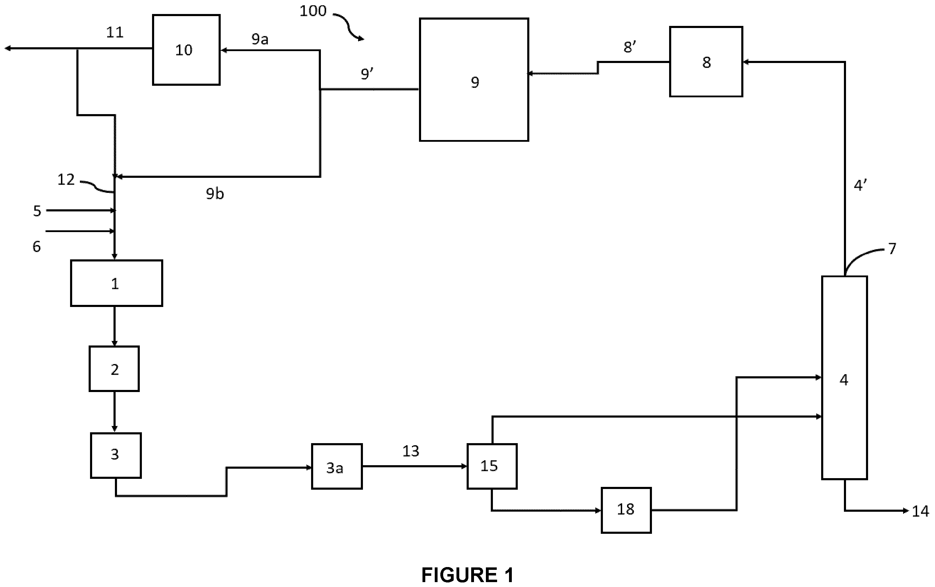

Referring now to Fig.1, an embodiment of a mono-pressure nitric acid plant (100) according to the present disclosure is illustrated. An oxygen-enriched air mixture (5) and ammonia gas stream (6) is supplied to a mixing apparatus (1) thereby producing an ammonia/oxygen-enriched air mixture. The plant further comprises an air compressor (not shown) to provide a compressed air stream and a source of pressurised oxygen-rich gas (not shown), in fluid communication with the compressed air stream to provide the oxygen-enriched air mixture (5). The source of pressurised oxygen-rich gas is particularly a high-pressure water electrolyser or a waste gas from an air separation unit. The ammonia/oxygen-enriched air mixture is further oxidised in a converter (2), located downstream of the mixing apparatus (1), to obtain a NOₓ gas/steam mixture. This NOₓ gas/steam mixture is supplied to a gas cooler (3) and then to condenser (3a) allowing to separate and condense steam and generating a stream (13) comprising aqueous diluted nitric acid and uncondensed gaseous NOₓ. The stream (13) is thereafter supplied to a gas liquid separator (15) thereby separating diluted nitric acid and uncondensed gaseous NOₓ. The diluted nitric acid is supplied to a weak acid pump (18) and further to an absorption tower (4), located downstream of the gas liquid separator (15) and weak acid pump (18). On the other end, the uncondensed gaseous NOₓ is also supplied to the absorption tower (4). Inside the absorption tower (4), the uncondensed gaseous NOₓ reacts with water thereby obtaining a raw nitric acid-containing stream (14) and a tail gas (4'). The raw nitric acid-containing stream (14) also containing residual NOₓ gas is fed to a bleacher (not shown) where the NOₓ gas is stripped with a gaseous medium (not shown) such as an oxygen-containing gas or air. The tail gas (4') thus obtained is evacuated by the outlet (7) and heated in a first heating section (8) to provide a heated tail gas stream (8'). Subsequently, the heated tail gas stream (8') is supplied to tail gas treatment section (9) resulting in a treated tail gas stream (9'). The tail gas treatment section (9) comprises catalytic beds for N₂O and/or NOₓ removal. A part of the treated tail gas stream (9a) is directed to a second heating section (10) to obtain a second heated tail gas stream (11). The first heating section (8) and second heating section (10) typically comprise of one or more heat exchangers. The temperature of the stream (9a) is in the range of 200-400°C. The temperature of the second heated tail gas stream (11) is in the range of 400-600°C and is reduced by adding a second part of the treated tail gas (9b) bypassing the second heating section (10) thereby obtaining a stream (12). The second part of the treated tail gas (9b) has the temperature in the range of 200-400°C. The resulting stream (12), having a temperature in the range of 150-300°C, enters the mixing apparatus (1) and converter such that the temperature in the converter (2) is maintained in the range of 800 and 950°C.

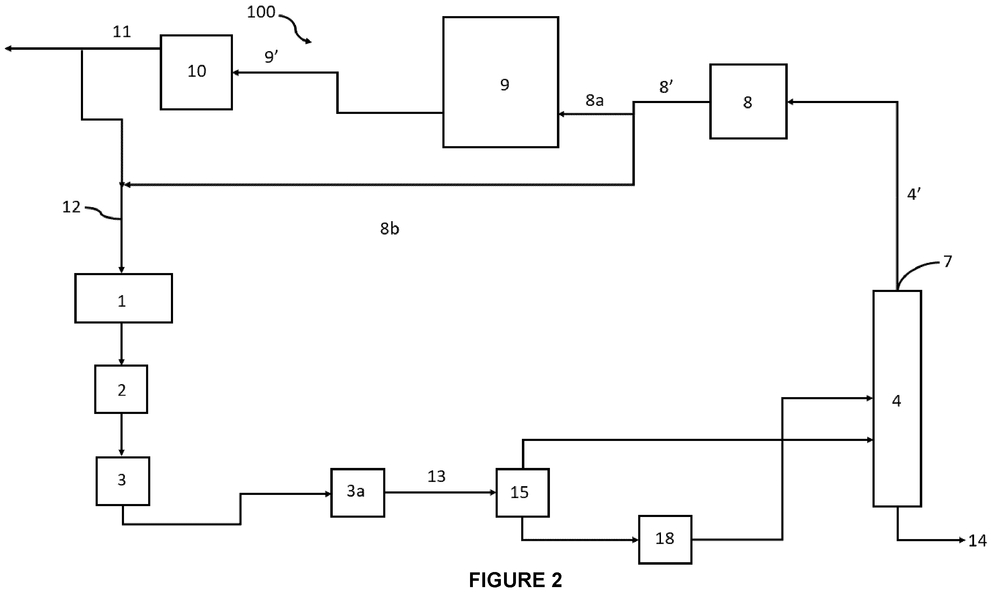

Another embodiment of the mono-pressure nitric acid plant (100) according to the present disclosure is shown in **Fig. 2****.** The tail gas (4') is formed in the nitric acid plant according to **Fig. 1** and is heated in a first heating section (8) to provide a heated tail gas stream (8'). The part of the heated tail gas stream (8a), having temperature in the range of 180-400°C, is supplied to a tail gas treatment section (9) resulting in a treated tail gas stream (9') and further supplied to a second heating section (10) to obtain a second heated tail gas stream (11). The first heating section (8) and second heating section (10) typically comprise of one or more heat exchangers. The temperature of the second heated tail gas stream (11) is in the range of 400-600°C and is reduced by adding a second part of the heated tail gas (8b) bypassing the tail gas treatment section (9) to obtain a recycled tail gas stream (12). The second part of the heated tail gas stream (8b) has the temperature in the range of 180-400°C. The stream (12), having a temperature in the range of 150-300°C, is supplied to the mixing apparatus (1) and thereafter to the converter such that the temperature in the converter (2) is maintained in the range of 800 and 950°C.

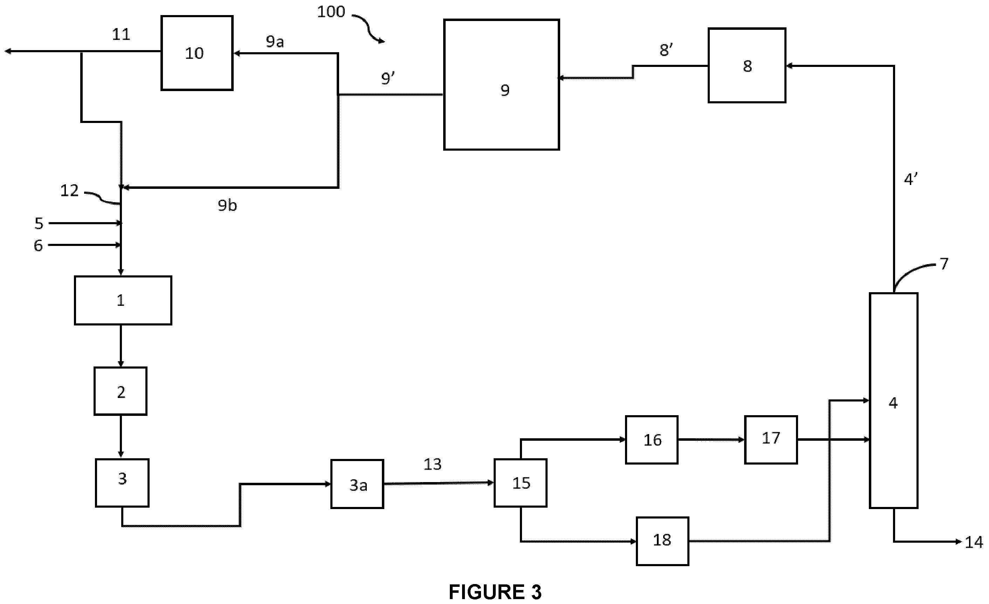

An embodiment of a dual-pressure nitric acid plant (100) according to the present disclosure is illustrated in **Fig. 3****.** The stream (13) comprising aqueous diluted nitric acid and uncondensed gaseous NOₓ is formed as disclosed in the nitric acid plant of Fig. 1. The stream (13) is thereafter supplied to a gas liquid separator (15), located downstream of the condenser (3a), thereby separating diluted nitric acid and uncondensed gaseous NOₓ. The diluted nitric acid is supplied to a weak acid pump (18) and further to an absorption tower (4) located downstream of the weak acid pump (18). The uncondensed gaseous NOₓ separated from the gas liquid separator (15) is passed through a NOₓ compressor (16) and thereafter through a cooler/condenser unit (17) and is further provided to the absorption tower (4) for absorbing uncondensed gaseous NOx. Inside the absorption tower (4), the uncondensed gaseous NOₓ reacts with water thereby obtaining a raw nitric acid-containing stream (14) and a tail gas (4'). The raw nitric acid-containing stream (14) also containing residual NOₓ gas is fed to a bleacher (not shown) where the NOₓ gas is stripped with a gaseous medium (not shown) such as an oxygen-containing gas or air. The tail gas (4') thus obtained is evacuated by the outlet (7) and heated in a first heating section (8) to provide a heated tail gas stream (8'). Subsequently, the heated tail gas stream (8') is supplied to tail gas treatment section (9) resulting in a treated tail gas stream (9'). The tail gas treatment section (9) comprises catalytic beds for N₂O and/or NOₓ removal. A part of the treated tail gas stream (9a) is directed to a second heating section (10) to obtain a second heated tail gas stream (11). The first heating section (8) and second heating section (10) typically comprise of one or more heat exchangers. The temperature of the stream (9a) is in the range of 200-400°C. The temperature of the second heated tail gas stream (11) is in the range of 400-600°C and is reduced by adding a second part of the treated tail gas (9b) bypassing the second heating section (10) thereby obtaining a recycled tail gas stream (12). The second part of the treated tail gas (9b) has the temperature in the range of 200-400°C. The resulting recycled tail gas stream (12), having a temperature in the range of 150-300°C, enters the mixing apparatus (1) and converter (2) such that the temperature in the converter is maintained in the range of 800 and 950°C.

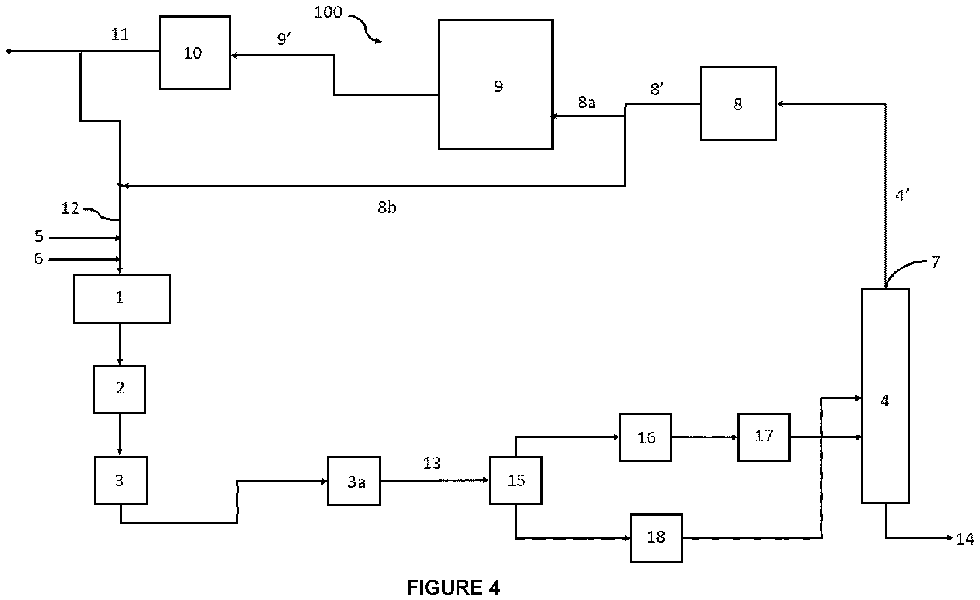

Another embodiment of the dual-pressure nitric acid plant (100) according to the present disclosure is shown in **Fig. 4****.** The tail gas (4') is formed in the nitric acid plant according to **Fig. 3** and is heated in a first heating section (8) to provide a heated tail gas stream (8'). The part of the heated tail gas stream (8a), having temperature in the range of 180-400°C, is supplied to a tail gas treatment section (9) resulting in a treated tail gas stream (9') and further supplied to a second heating section (10) to obtain a second heated tail gas stream (11). The first heating section (8) and second heating section (10) typically comprise of one or more heat exchangers. The temperature of the second heated tail gas stream (11) is in the range of 400-600°C and is reduced by adding a second part of the heated tail gas (8b) bypassing the tail gas treatment section (9) to obtain a recycled tail gas stream (12). The second part of the heated tail gas stream (8b) has the temperature in the range of 180-400°C. The recycled tail gas stream (12), having a temperature in the range of 150-300°C, is supplied to the mixing apparatus (1) and thereafter to the converter such that the temperature in the converter (2) is maintained in the range of 800 and 950°C.

The process and the plant for producing nitric acid of the present disclosure offer several advantages. By extracting a part of the tail gas downstream of the tail gas treatment section, the NOₓ emissions from the tail gas may be reduced. This results in less NOₓ gases returning to the ammonia converter when the treated tail gas is recycled. Further, as most of the NOₓ is removed from the treated tail gas, the possibility of unreacted NOₓ combining with ammonia forming unwanted ammonium nitrate in low temperature points upstream of the gauzes is greatly reduced. Further, by extracting a part of the tail gas upstream of the tail gas treatment section before cleaning up the NOₓ gases, the process does not consume ammonia in the DeNOₓ reactions. Thus, there is less demand of ammonia for converting NOₓ to nitrogen gas. The NOₓ gases (NO and NO₂) in the tail gas stream will pass unreacted through the ammonia oxidation gauze and then end up in the process gas. Therefore, there is a slightly less loss of NOₓ in the process. Moreover, due to less demand for ammonia, the possibility of unreacted NOₓ combining with ammonia forming unwanted ammonium nitrate is also reduced. Furthermore, the method of revamping an existing nitric acid production plant according to the present disclosure provides for minimum modifications of the existing plant while integrating the means for splitting the treated tail gas stream and the means for splitting the heated tail gas stream with low capital expenditure and with few changes on the nitric acid production process.

While the preferred embodiments of the present disclosure have been shown and described, it will be apparent to those skilled in the art that changes and modifications may be made therein without departing from the spirit of the invention, the scope of which is defined by the appended claims.

## Claims

1. A process for production of nitric acid in a nitric acid production plant (100) comprising a mixing apparatus (1), a converter (2), a condenser (3a), an absorption tower (4) with an outlet (7) for evacuating a tail gas stream (4'), a first heating section (8), a second heating section (10) and a tail gas treatment section (9), the process comprising the steps:
a) supplying an oxygen-enriched air mixture (5), an ammonia gas stream (6) and a recycled tail gas stream (12) to the mixing apparatus (1), thereby producing an ammonia/oxygen-enriched air mixture and further oxidising the ammonia/oxygen-enriched air mixture in the converter (2) to obtain a NOₓ gas/steam mixture;
b) separating and condensing steam from the NOx gas/steam mixture, thereby generating a stream (13) comprising aqueous diluted nitric acid and uncondensed gaseous NOₓ;
c) separating dilute nitric acid and uncondensed gaseous NOx from stream (13) comprising aqueous diluted nitric acid and uncondensed gaseous NOx, and supplying the uncondensed gaseous NOₓ to the absorption tower (4) for absorbing uncondensed gaseous NOₓ, thereby obtaining a raw nitric acid-containing stream (14) and a tail gas (4');
d) heating the tail gas (4') in a first heating section (8) to provide a heated tail gas stream (8');
e) supplying the heated tail gas stream (8') to the tail gas treatment section (9) resulting in a treated tail gas stream (9'); wherein a part of the treated tail gas stream (9a) is directed to the second heating section (10) to obtain a second heated tail gas stream (11), wherein the temperature of a part of the second heated tail gas stream (11) is reduced by adding a second part of the treated tail gas (9b) bypassing the second heating section (10) thereby obtaining the recycled tail gas stream (12) that is provided to the mixing apparatus (1) and thereafter to the converter such that the temperature in the converter (2) is maintained in the range of 800 and 950°C; and/or
supplying a part of the heated tail gas stream (8a) to the tail gas treatment section (9) resulting in the treated tail gas stream (9'), which is further supplied to the second heating section (10) to obtain the second heated tail gas stream (11); wherein the temperature of a part of the second heated tail gas stream (11) is reduced by adding a second part of the heated tail gas (8b) bypassing the tail gas treatment section (9) thereby obtaining the recycled tail gas stream (12) that is provided to the mixing apparatus (1) and thereafter to the converter such that the temperature in the converter (2) is maintained in the range of 800 and 950°C.

2. The process according to claim 1, wherein step c) further comprises passing the uncondensed gaseous NOₓ through a NOₓ compressor (16) and thereafter through a cooler/condenser unit (17) before supplying the uncondensed gaseous NOₓ to the absorption tower (4) for absorbing uncondensed gaseous NOₓ.

3. The process according to claim 1 or 2, wherein the temperature of the second heated tail gas stream (11) is higher than the temperature of the recycled tail gas stream (12) that is provided to the mixing apparatus (1) and thereafter to the converter (2).

4. The process according to claim 1 or 3, wherein the temperature of the heated tail gas stream (8') is lower than the second heated tail gas stream (11) or wherein the temperature of the treated tail gas stream (9') is lower than the second heated tail gas stream (11).

5. The process according to any one of claims 1 to 4, wherein the tail gas treatment section (9) comprises catalytic beds for N₂O and/or NOₓ removal.

6. The process according to any one of claims 1 to 5, wherein the oxygen-enriched air mixture (5) is obtained by mixing a pressurised oxygen-rich gas and a compressed air stream, particularly wherein the source of pressurised oxygen-rich gas is a high pressure water electrolyser or a waste gas from an air separation unit and wherein the compressed air stream is obtained by compressing air in an air compressor.

7. The process according to any one of claims 1 to 6, wherein the ammonia gas stream (6) is supplied from an ammonia plant or an ammonia storage tank.

8. A nitric acid production plant (100), for production of nitric acid comprising:
- a mixing apparatus (1) for mixing an oxygen-enriched air mixture (5), an ammonia gas stream (6) and a recycled tail gas stream (12), to provide an ammonia/oxygen-enriched air mixture;
- a converter (2) for oxidising ammonia in the ammonia/oxygen-enriched air mixture to provide a NOₓ gas/steam mixture;
- a condensing means for separating and condensing steam from the NOₓ gas/steam mixture thereby providing a mixture (13) comprising aqueous diluted nitric acid and uncondensed gaseous NOₓ;
- a gas liquid separator (15) for separating aqueous diluted nitric acid and uncondensed gaseous NOₓ;
- an absorption tower (4), located downstream the gas liquid separator (15) and configured to receive the separated diluted nitric acid and to receive the uncondensed gaseous NOₓ from the gas liquid separator (15), to provide a raw nitric acid-containing stream (14) and a tail gas (4'); wherein the absorption tower (4) comprises an outlet (7) for evacuating a tail gas stream (4');
- a first heating section (8) for heating the tail gas (4') to provide a heated tail gas stream (8');
- a tail gas treatment section (9) for treating the heated tail gas stream (8') resulting in treated tail gas stream (9');
- a means for splitting the treated tail gas stream (9'), wherein a part of the treated tail gas stream (9a) is directed to a second heating section (10) to obtain a second heated tail gas stream (11), and wherein a second part of the treated tail gas (9b) bypasses the second heating section (10) and is added to the second heated tail gas stream (11), thereby reducing the temperature of a part of the second heated tail gas stream (11) to obtain the recycled tail gas stream (12) that is provided to the mixing apparatus (1) and thereafter to the converter such that the temperature in the converter (2) is maintained in the range of 800 and 950°C, and/or a means for splitting the heated tail gas stream (8'), wherein a part of the heated tail gas stream (8a) is supplied to the tail gas treatment section (9) resulting in a treated tail gas stream (9') and further supplied to a second heating section (10) to obtain a second heated tail gas stream (11); wherein the temperature of a part of the second heated tail gas stream (11) is reduced by adding a second part of the heated tail gas stream (8b) bypassing the tail gas treatment section (9) thereby obtaining the recycled tail gas stream (12) that is provided to the mixing apparatus (1) and thereafter to the converter such that the temperature in the converter (2) is maintained in the range of 800 and 950°C.

9. The nitric acid production plant according to claim 8, wherein the plant further comprises a NOₓ compressor (16) for receiving the uncondensed gaseous NOₓ separated from the gas liquid separator (15) and a cooler/condenser unit (17) located downstream of the NOₓ compressor (16) for cooling and condensing the uncondensed gaseous NOₓ and further provided to the absorption tower (4) for absorbing uncondensed gaseous NOₓ

10. The nitric acid production plant according to claim 8 or 9, wherein the tail gas treatment section (9) comprises catalytic beds for N₂O and/or NOₓ removal.

11. The nitric acid production plant according to any one of claims 8 to 10, wherein the plant further comprises an air compressor to provide a compressed air stream and a source of pressurised oxygen-rich gas, particularly a high pressure water electrolyser or a waste gas from an air separation unit, in fluid communication with the compressed air stream to provide the oxygen-enriched air mixture (5).

12. The process according to any one of claims 8 to 11, wherein the ammonia gas stream (6) is supplied from an ammonia plant or an ammonia storage tank.

13. Use of the nitric acid production plant according to any one of claims 8 to 12 for performing the method according to any one of claims 1 to 7.

14. A method of revamping a nitric acid production plant, wherein the existing nitric acid production plant comprises:
- a mixing apparatus (1) for mixing an oxygen-enriched air mixture (5) and ammonia gas stream (6) to provide an ammonia/oxygen-enriched air mixture;
- a converter (2) for oxidising ammonia in the ammonia/oxygen-enriched air mixture to provide a NOₓ gas/steam mixture;
- a condensing means for separating and condensing steam from NOₓ gas/steam mixture thereby providing a mixture (13) comprising aqueous diluted nitric acid and uncondensed gaseous NOₓ;
- a gas liquid separator (15) for separating aqueous diluted nitric acid and uncondensed gaseous NOₓ;
- an absorption tower (4) located downstream the gas liquid separator (15) and configured to receive separated diluted nitric acid and to receive the uncondensed gaseous NOₓ from the gas liquid separator (15) to provide a raw nitric acid-containing stream (14) and a tail gas (4'); wherein the absorption tower (4) comprises an outlet (7) for evacuating a tail gas stream (4');
- a first heating section (8) for heating the tail gas (4') to provide a heated tail gas stream (8');
- a tail gas treatment section (9) for treating the heated tail gas stream (8') resulting in treated tail gas stream (9') and
- optionally comprises a NOₓ compressor (16) for receiving the uncondensed gaseous NOₓ separated from the gas liquid separator (15) and a cooler/condenser unit (17) downstream of the NOₓ compressor (16) for cooling and condensing the uncondensed gaseous NOₓ and further provided to the absorption tower (4) for absorbing uncondensed gaseous NOₓ;
the method of revamping comprising the step of:
- introducing a means for splitting the treated tail gas stream (9'), wherein a part of the treated tail gas stream (9a) is directed to a second heating section (10) to obtain a second heated tail gas stream (11), wherein the temperature of a part of the second heated tail gas stream (11) is reduced by adding a second part of the treated tail gas (9b) bypassing the second heating section (10) thereby obtaining a recycled tail gas stream (12) that is provided to the mixing apparatus (1) and thereafter to the converter such that the temperature in the converter (2) is maintained in the range of 800 and 950°C, and/or
- introducing a means for splitting the heated tail gas stream, wherein a part of the heated tail gas stream (8a) is supplied to a tail gas treatment section (9) resulting in a treated tail gas stream (9') and further supplied to a second heating section (10) to obtain a second heated tail gas stream (11); wherein the temperature of a part of the second heated tail gas stream (11) is reduced by adding a second part of the heated tail gas (8b) bypassing the tail gas treatment section (9) to obtain a recycled tail gas stream (12) that is provided to the mixing apparatus (1) and thereafter to the converter such that the temperature in the converter (2) is maintained in the range of 800 and 950°C.
